Europäisches Patentamt

European Patent Office

Office européen des brevets

(11) Publication number: 0 632 266 A2

## EUROPEAN PATENT APPLICATION

(21) Application number: 94107147.4

(51) Int. Cl.6: G01N 29/02

(22) Date of filing: 06.05.94

(30) Priority: 29.06.93 US 84885

(43) Date of publication of application:
04.01.95 Bulletin 95/01

(84) Designated Contracting States:
DE GB SE

(71) Applicant: Hewlett-Packard Company
Mail Stop 20 B-O,
3000 Hanover Street
Palo Alto,
California 94304 (US)

(72) Inventor: Tom-Moy, May
3391 Brittan Avenue
San Carlos, CA 94070 (US)

(74) Representative: Schoppe, Fritz, Dipl.-Ing.
Patentanwalt,
Georg-Kalb-Strasse 9
D-82049 Pullach (DE)

(54) The use of lectins immobilized on piezoelectric surface wave devices as a carbohydrate analyzer.

(57) A system for accurate and precise measurements of carbohydrate-containing compound(s) in a sample is provided. The system uses piezoelectric surface wave sample devices which have a receptor layer containing lectins, lectin subunits or lectin analogs which have been selected because they are complementary to and have affinity for the carbohydrate-containing compound(s) to be measured. At least one piezoelectric surface wave reference device is also used to account for interferences. The measurement instrument correlates the data from the sample and reference devices and provides data on the presence and/or amount of carbohydrate-containing compound in the sample.

FIG._2

## BACKGROUND OF THE INVENTION

Field of The Invention

The present invention relates to analytical chemistry, and more particularly, to devices and methods for analyzing carbohydrates.

State of The Art

In the field of carbohydrate chemistry, there is a great need for the development of simple and reliable techniques for carbohydrate analysis. Novel carbohydrates, glycoproteins and other glycoconjugates which are useful for the treatment of such diseases or conditions as cancer and acute inflammatory disease, have been developed. Analysis of the specific structure of these compounds is important for understanding the carbohydrate's binding and receptor capabilities. If the compound is used therapeutically, the microheterogenicity of the oligosaccharide must also be monitored for FDA purposes. Monitoring of sugar levels in fermentation systems or bioreactors in the pharmaceutical, food or biotechnology industries can also be critical.

Presently known analytical techniques for glycoconjugate characterization are difficult and require expensive instrumentation, such as x-ray crystallography and NMR. Other analytical techniques require the use of secondary "detection" reagents such as chromophores or radiolabelled compounds. The use of such methods as optical rotation to detect sugars in solution requires conditions of low signal response from other optically-active compounds and low scattering media, conditions which are not typically found in fermenters or bioreactors.

Piezoelectric sensors have been used as microgravimetric immunoassay devices. (See, for example, Joy E. Roederer and Glenn J. Bastiaans, "Microgravimetric Immunoassay with Piezoelectric Crystals", Anal. Chem., 2333-2336 (1983). These sensors operate on the principle that changes in the amount of mass attached to their surface cause shifts in the resonant frequency. Selective mass detection is achieved by coating the surface of the piezoelectric crystal with a chemically reactive layer that preferentially reacts with the substance to be detected such that the mass of the chemically reactive layer changes. Such devices function as chemical sensors that can measure the concentration of the selected class of compounds in a solution into which the sensor or device is immersed. Radio frequency energy coupled into the device through the input transducer is converted to a surface acoustic wave confined to within a few wavelengths of the surface. The velocity of the surface acoustic wave will vary according to the mass loading of the top surface of the device. The surface acoustic wave propagates along the surface of the device until it encounters the output transducer, which converts the surface acoustic wave back into radio frequency energy. The change in velocity of the surface acoustic wave with the mass loading of the surface of the device results in variation of the phase of the radio frequency signal which is output by the output transducer. This can be correlated to the mass of the substance bound to the surface of the device.

For ascertaining the concentration of a compound in a liquid, the piezoelectric sensor is preferably a surface transverse wave device (STW) or a Love wave device (collectively referred to as "piezoelectric surface wave devices"). Such devices are known in the art and are disclosed, for example, in U.S. Patent Number 5,130,257 and U.S. Patent Application Serial Numbers 07/792,975, 07/876,804, 07/404,721 and 08/041,662 the disclosures of which are herein incorporated by reference in their entirety.

The mass sensitivity (i.e., the fractional frequency change divided by the mass change of material deposited on the surface of the device) increases as the mass of the piezoelectric surface wave device is decreased or, correspondingly, as the device thickness is decreased. A practical lower limit of about 100 microns, corresponding to a resonance frequency of about 20 Mhz, is imposed on device thickness by manufacturing difficulties. Consequently, the sensitivity of these piezoelectric surface wave devices is limited.

As an additional complication, while prior art devices attribute the shift in resonant frequency in piezoelectric surface wave devices used in liquid sample (e.g., aqueous solutions) to changes in the mass attached to the surface, not all of this shift is due solely to increases in the mass. In particular, physical and chemical factors such as temperature, pressure, non-specific binding, ionic strength, conductivity, mass density, viscosity, etc., are all interrelated to the shift in resonant frequency and interfere with any direct correlation between the shift in resonant frequency and the changes in mass attached to the surface of the device. While this interference can be minimized to some extent, a true correlation between frequency shifts and mass is not possible.

In the prior art, multiple measurements of multiple analytes has required a large volume of analyte to be divided into separate samples, one for each measurement. In certain medical testing or pharmaceutical applications, only a limited quantity of analyte may be available. Without the ability to perform multiple measurements of multiple analytes from a single sample, the number of measurements that may be performed is therefore limited. In particular, measurement of several carbohydrate-containing compounds may be required in a small quantity of sample.

What is needed is an inexpensive, specific, sensitive, and convenient carbohydrate analyzer which can be used for direct detection of one or more carbohydrate-containing compounds in a small amount of sample.

## SUMMARY OF THE INVENTION

A measurement system for determining the amount and/or presence of one or more carbohydrate-containing compounds in a sample is provided. The measurement system employs a plurality of piezoelectric surface wave devices (e.g., STW or Love devices) which respond to the chemical environment proximal to the device surface. In particular, the measurement system employs both sample and reference piezoelectric surface wave devices. The reference device(s) provide a means to account for changes in shifts in the resonant frequency which do not correlate to mass changes on the surface of the device due to the presence of the assayed carbohydrate-containing compound(s) (e.g., interference). This interference can be removed mathematically from the data collected from the sample device so as to provide a significantly more accurate calculation of the concentration of the chemical measured by the sample device.

The present invention, generally speaking, provides an assay method which yields accurate detection of these analytes in a sample while accounting for interferences that cause shifts in the resonant frequency that do not correlate to mass changes on the surface of piezoelectric surface wave devices surface wave devices measuring for single or multiple analytes. When multiple sample devices are employed to measure a single carbohydrate-containing compound, the measurement system described herein can provide for multiple readings on the same analyte concentration which, accordingly, provides for an accurate and precise system of measurement including a statistical analysis of the measurement results.

In particular, the present invention employs one or more lectins or lectin subunits immobilized on one or more piezoelectric surface wave devices. These immobilized lectin(s) have affinity for particular carbohydrate-containing compounds which may be present in the sample to be measured.

Accordingly, in one of its device aspects, the present invention provides a measurement system for determining the amount of one or more carbohydrate-containing analytes. This measurement system uses one or more piezoelectric surface wave sample devices which have a receptor layer attached to their surface. This receptor layer contains naturally occurring or non-naturally occurring lectins, lectin subunits, or lectin analogs, which have been selected because they are complementary to and have affinity for the carbohydrate-containing analyte(s) to be measured. When the sample is in contact with the device(s), the device(s) generate data relating to the mass change on the surface of the device due to the interaction of the carbohydrate-containing analyte and the lectin on the receptor layer.

The system also contains at least one piezoelectric surface wave reference device which has a receptor layer with little or no affinity for the carbohydrate-containing analyte(s). This reference device generates data relating to the interferences arising from contacting the device with the sample. Data from sample and reference devices is correlated by a measurement instrument which then provides data on the presence and/or amount of the carbohydrate-containing analyte(s) in the sample.

In one of its method aspects, the present invention provides to a method for determining the amount and/or presence of one or more carbohydrate-containing analytes in a sample. This method uses the measurement system described in the preceding paragraphs to obtain data from both the sample and reference devices. This data is then used to determine the presence and/or concentration of the carbohydrate-containing analyte(s) in the sample.

The present invention also provides a chemical sensor for testing for a plurality of carbohydrate-containing analytes in a single sample. This chemical sensor uses a plurality of piezoelectric surface wave sample devices, each of which has a different receptor layer attached to it. Each receptor layer contains a different naturally occurring or non-naturally occurring lectin, lectin subunit or lectin analog, which is complementary to and has affinity for one of the plurality of carbohydrate-containing analytes.

This invention further provides a measurement system for a single carbohydrate-containing analyte in a sample, which uses a plurality of piezoelectric surface wave sample devices each of which has a receptor layer containing a naturally occurring or non-naturally occurring lectin, lectin subunit or lectin analog, which is complementary to and has affinity for the same carbohydrate-containing analyte. This system thus allows multiple measurements of the same analyte in a single sample. This improves the precision and accuracy of the measurement provided.

**BRIEF DESCRIPTION OF THE DRAWINGS**

Figure 1 is a diagram of a piezoelectric surface wave sample device;

Figure 2 is an electrical block diagram of a chemical analyzer having a single piezoelectric surface wave sample device and a single piezoelectric surface wave reference device;

Figure 3 is a waveform diagram of an output signal of the device of Figure 2;

Figures 4A and 4B are electrical block diagrams of a chemical analyzer having a single radio frequency source, multiple piezoelectric surface wave sample devices and a single piezoelectric surface wave reference device;

Figure 5 is a diagram showing fluid flow in a conventional chemical analyzer; and

Figures 6A and 6B are diagrams showing fluid flow in accordance with the present invention.

**DETAILED DESCRIPTION OF THE INVENTION**

In the following, there will be described a measurement system that provides accurate measurements of carbohydrate-containing compounds in samples. The measurement system utilizes piezoelectric surface transverse wave or Love Wave devices (collectively "piezoelectric surface wave devices") to measure the concentration of the target analyte(s).

A piezoelectric surface wave device generally comprises a piezoelectric substrate, one or more transducers, typically interdigital transducers (IDT), and gratings or plates which trap the mode to the surface of the substrate. A grating-based piezoelectric surface wave waveguide or device is known as an STW device; whereas a plate-based piezoelectric surface wave waveguide or device is known as a Love Wave device. Additionally, for piezoelectric surface wave sample devices, the device includes a chemically reactive layer (receptor layer) to react with the preselected analyte(s) to be detected. Such devices are disclosed in copending U.S. Patent Applications Serial Nos. 07/251,149 (now U.S. Patent No. 5,130,257) and 07/792,975, both of which are herein incorporated by reference in their entirety. As such, the measurement system is capable of determining the amount and/or presence of analyte(s) in a sample, particularly a liquid sample.

In the following description of the measurement system, the term "carbohydrate" means a compound that contains one or more saccharide units. The saccharide unit(s) may be chemically modified. A "carbohydrate-containing compound" means a carbohydrate by itself or a carbohydrate present in a glyconjugate.

Also in the following description of the measurement system, the term "analyte" means a structure, compound, chemical, or composition which specifically binds to a receptor so as to allow measurement of the concentration of the analyte. In particular, an analyte may be any carbohydrate or carbohydrate-containing compound such as a monosaccharide, oligosaccharide, polysaccharide, glycoprotein, glycopeptide, glycolipid, glycoconjugate, cell, cell fragment, cell component, bacterium, yeast, fungus, protozoa or virus. An analyte which recognizes a particular receptor is said to be complementary to that receptor.

Further, in the following description of the measurement system, the term "receptor" refers to any compound which specifically binds to an analyte so as to allow measurement of the concentration of the analyte. Receptors which recognize a particular analyte are said to be complementary to that analyte.

A receptor and its complementary analyte are sometimes referred to as a receptor/analyte binding pair. Receptor/analyte binding pairs are well known in the art and include antigen/antibody pairs, biotin/avidin pairs, lectin/carbohydrate pairs, and the like. A particularly preferred receptor/analyte pair is the lectin/carbohydrate pair.

Further in the following description of the measurement system, the term "preselected analyte" refers to the analyte complementary to the receptor placed on the surface of the piezoelectric surface wave sample device. The term "piezoelectric surface wave sample device" or "piezoelectric surface wave chemical device" refers to a piezoelectric surface wave device which contains one or more different receptors bound directly or indirectly to its surface so as to be able to selectively bind one or more analytes complementary to the receptor(s). The receptors are typically attached to the piezoelectric surface wave sample device surface by covalent bonds but other types of linkage are possible (e.g., ionic attachment, etc.).

Methods for the attachment of receptors to such a surface are well known in the art and include, by way of example, the use of organic silanes, avidin or streptavidin, biotin, proteins, polymers, lipid bilayers, and

4

the like. The specific means for attachment to the piezoelectric surface wave device surface are not critical and any well known means for attaching a receptor to a solid surface can be used.

The measurement systems of the present inventions are useful for measuring a wide variety of analytes. Areas of application include, but are not limited to, pharmaceuticals, *in vitro* diagnostics, food and agriculture quality assurance and control, research, and medicine.

Lectins are carbohydrate-binding proteins of non-immune original which are widely used as probes of membrane glycoproteins and other glycoconjugates. The binding of lectins to sugars is dependent on the configurational and structural complementarity of the binding site on the sugar moiety. All lectin molecules have two or more carbohydrate binding sites, i.e., they are multimeric, consisting of non-covalently associated subunits. This property is essential to their ability to agglutinate cells or to precipitate complex carbohydrates. Lectins have been isolated from bacteria, slime mold and lower vertebrates. The best characterized lectins are derived from plants. For purposes of this application, the term "lectin" is meant to include a naturally or non-naturally occurring lectin, lectin subunit or lectin analog.

A preferred embodiment of this invention utilizes lectins immobilized on a piezoelectric surface wave device as a means of selectively detecting distinct monosaccharides, polysaccharides or oligosaccharides. These saccharides may be present in the sample by themselves, or they may be in glycoconjugates present in sample solutions, or in receptors present on cell membranes or viruses.

As previously described, the piezoelectric surface wave device is a mass sensitive acoustic device. The binding of a specific carbohydrate moiety by the immobilized lectin on the surface of the device causes a decrease in the propagation velocity of the generated wave. This causes a shift in the frequency which is electronically measured as a phase change. The measurement is also made with a reference device that is not derivatized with a lectin specific for the particular carbohydrate being measured.

Each lectin has specificity toward a particular carbohydrate structure or structures so that similar oligosaccharides with different sugar compositions can be distinguished or separated. This distinction is based not only on the complementarity of the binding site but also on influences from stearic factors and the nature of the glycosidic linkages. The specificity of the lectin is defined by the sugars that are the most potent inhibitors of agglutination or precipitation that the lectin induces. However, the binding of lectins to glycoconjugates is often more complex than the binding to simple sugars. Some lectins may bind to structures with mannose or glucose residues whereas other lectins may combine with galactose residues. Other lectins require the specific sugar to be in a terminal non-reducing position whereas others can bind to sugars located internally within the oligosaccharide chain. While some lectins cannot discriminate alpha from beta anomeric structures, other lectins require the correct anomeric structure as well as a specific sequence of sugars for binding. Binding affinities of various lectins will also differ depending on small changes in the carbohydrate structure of the receptor or glycoprotein. Thus, using lectins as the receptor molecules of the present invention allows determination of very specific carbohydrate structures.

Some examples of the specificity of lectins for sugars follow. Others are set forth in Table 1. A comprehensive listing of lectin specificities can be found in Wu, et al., "A Guide for Carbohydrate Specificities of Lectins", The Molecular Immunology of Complex Carbohydrates, Wu, et al., eds., 819-847 (1988). Immobilizing lectins of known specificity on the piezoelectric surface acoustic wave device of the present invention enables one to detect the presence and/or amount of specific carbohydrates or carbohydrate-containing compounds in a sample.

Concanavalin A (Con A) recognizes a commonly occurring sugar structure, alpha-linked mannose and D-glucose.

Erythrina cristagalli (ECL) has specificity toward galactose and high binding activity towards galactosyl (Beta-1,4) N-acetylglucosamine.

Jacalin binds only to O-glycosidically linked oligosaccharides and has preference for galactosyl (beta-1,3) N-acetylgalactosamine.

Lens Culinaris Agglutinin (LCA, LcH) recognizes sequences containing alpha-linked mannose residues. It has narrower specificity that Con A and can recognize alpha-linked fucose residues attached to N-acetylchitobiose portion of the core oligosaccharide.

Ricinus Communis Agglutinin (RCA, RCA I) binds preferentially to oligosaccharides ending in galactose but may also interact with N-acetylgalactosamine.

## TABLE 1

### LECTINS CLASSIFIED ON THE BASIS OF THEIR CARBOHYDRATE BINDING SPECIFICITY

| AGGLUTININ OR LECTINS FROM | ABBREVI- ATION | SUGAR SPECIFICITY | BLOOD GROUP SPECIFICITY |
|---|---|---|---|
| I. D-MANNOSE (D-GLUCOSE)-BINDING LECTINS | | | |
| CONCANAVALIAN A, CONCANAVALIA ENSIFORMIS (Jack Bean) | CON A | $\alpha$-D-man>$\alpha$-D-Glc>$\alpha$-GlcNAc | nonspecific |
| D-MANNOSE (D-GLUCOSE)-BINDING LECTINS which are different from Con A in that the fucose in the mannose containing oligosaccharide chain is an important determinant | | | |
| LENS CULINARIS | LCH | $\alpha$-D-man>$\alpha$-D-Glc>$\alpha$-GlcNAc | nonspecific |
| PISUM SATIVUM (Pea bean) | PSA (PEA) | $\alpha$-D-man>$\alpha$-D-Glc>$\alpha$-GlcNAc | nonspecific |
| VICIA FABA | VFA | $\alpha$-D-Glc, $\alpha$-D-man | |
| II. N-ACETYL-D-GLUCOSAMINE-BINDING LECTINS | | | |
| TRITICUM VULGARIS (Wheat germ agglutinin) | WGA | $\beta$-D-GlcNAc(1→4) ,$\beta$-D-GlcNAc$_3$> (1→4)$\beta$-D-GlcNAc$_2$>> Sialic Acid | nonspecific |
| SUCCINYL WHEAT GERM AGGLUTININ | | ($\beta$(1→4)-D-GlcNAc)$_2$> GlcNAc | |
| GRIFFONIA (BANDEIRAEA) SIMPLICIFOLIA | GSL II | $\beta$-D-GlcNAc= $\alpha$-D-GlcNAc GalNH$_2$ GlcNH$_2$ | Anti TK |

## TABLE 1 (CONTINUED)

| AGGLUTININ OR LECTINS FROM | ABBREVI- ATION | SUGAR SPECIFICTIY | BLOOD GROUP SPECIFICITY |
|---|---|---|---|
| SOLANIUM TUBEROSOM (Potato) | STA | $\beta$-D-GlcNAc(1→4),$\beta$-D-GlcNAc(1→4)$_2$,$\beta$-D-GlcNAc | nonspecific |
| DATURA STAMONIUM (JIMSON WEED) | DSL | ($\beta$(1→4)D-GlcNAc)$_2$ | |
| PHASEOLUS VULGARIS (PHA-P) (Red Kidney bean) | PHA | $\beta$-D-Gal(1→4)$\beta$-D-GlcNAc(1→2)$\alpha$-D-man/ $\beta$-D-Gal(1→4)$\beta$-D-GlcNAc(1→2)$\alpha$-D-man | nonspecific |
| ULEX EUROPEUS | UEA-II | $\alpha$-L-fuc(1→2)D-Gal-$\beta$-(1→4)D-GlcNAc(1→6)>2-fucosyllactose> (D-GlcNAc)$_2$ | |
| LABURNUM ALPINUM | LAA | GlcNAc | |
| III. N-ACETYL-D-GALACTOSAMINE-BINDING LECTINS | | | |
| DOLICHOS BIFLORUS (Horse gram) | DBA | $\alpha$-D-GalNAc | $A_1$>$A_2$ |
| GLYCINE MAX (Soy bean) | SBA | $\alpha$-D-GalNAc>$\beta$-D-GalNAc | A>O>B |
| HELIX ASPERSA (Snail) | HAA | $\alpha$-D-GlcNAc>>$\alpha$-D-GlcNAc | A |

## TABLE 1 (CONTINUED)

| AGGLUTININ OR LECTINS FROM | ABBREVI-ATION | SUGAR SPECIFICITY | BLOOD GROUP SPECIFICITY |
|---|---|---|---|
| HELIX POMATIA (Snail) | HPA | $\alpha$-D-GalNAc>>$\alpha$-D-GalNAc | A |
| PHASEOLUS LIMENSIS (Lima bean) | LBA | $\alpha$-D-GalNAc>$\alpha$-D-Gal | $A_1$>$A_2$>>B |
| SOPHORA JAPONICA | SJA | $\beta$-D-Gal>$\beta$-D-GalNAc | B>A>O Iantigen |
| VISEA VILLOSA (VICIA VILLOSA) | VVA | D-GalNAc | A |
| WISTARIA FLORIBUNDA | WFA | D-GalNAc>D-Gal | nonspecific |
| VICIA GRAMINEA | VGA | D-GalNAc | N(Nvg) |
| BAUHINIA PURPUREA (BPA I AND II) | BPA | D-GalNAc>D-Gal | N or N + M |
| IV. D-GALACTOSE-BINDING LECTINS | | | |
| ABRUS PRECATORIUS (Jequirity bean) | APA | $\beta$-D-Gal>$\alpha$-D-Gal | B-O>A |
| RICINUS COMMUNIS (I & II) (Castor bean) | RCA | $\beta$-D-Gal>$\alpha$-D-Gal | nonspecific |
| TRICHOSANTHES KINLOWII | TKA | D-Gal | |
| VISCUM ALBUM | SRA VAA | D-Gal | |
| Specificity $\alpha$-D-Galactose >> $\beta$-D-galactose | | | |
| GRIFFONIA SIMPLICIFOLIA I | GSA I | $\alpha$-D-Gal>$\alpha$-D-GalNAc | B >> $A_1$ |

8

### TABLE 1 (CONTINUED)

| AGGLUTININ OR LECTINS FROM | ABBREVI-ATION | SUGAR SPECIFICITY | BLOOD GROUP SPECIFICITY |
|---|---|---|---|
| MACLURA POMIFERA (Osage Orange) | MPA | $\alpha$-D-Gal>$\alpha$-D-GalNAc | nonspecific |
| Specificity $\beta$-D-Gal(1$\rightarrow$3)D-Gal >> D-gal | | | |
| ERYTHRINA CRISTAGALLI | ECA | D-Gal$\beta$ (1$\rightarrow$3)GalNAc | |
| ARACHIS HYPOGAEA (Peanut) | PNA | D-Gal$\beta$ (1$\rightarrow$3)GalNAc | Anti-T extract |
| V. L-FUCOSE-BINDING LECTINS | | | |
| ANGUILLA ANGUILLA | AAA | L-Fucose | O |
| LOTUS TETRAGONOLOBUS | Lotus | $\alpha$-L-Fucose | O(H) |
| ULEX EUROPAEUS (I & II) | UEA | $\alpha$-L-Fucose (D-GlcNAc)[2] $\alpha$-L-Fucose >>(D-GlcNAc)[2] $\alpha$-L-Fucose | O(H) O(H) O(H) |
| VI. SIALIC ACID-BINDING LECTINS | | | |
| LIMAX FLAVUS AGGL | LFA | Sialic acid | |
| LIMULUS POLYHEMUS (Horseshoe crab) | LPA | Sialic acid | |
| HOMARUS AMERICANUS | LAg I | Sialic acid | |
| VII. LECTINS WITH COMPLEX CARBOHYDRATE BINDING SITES | | | |
| AGARICUS BISPORUS | ABA | | O(H) |
| EUONYMUS EUROPAEUS | EEA | | |

9

## TABLE 1 (CONTINUED)

| AGGLUTININ OR LECTINS FROM | ABBREVI- ATION | SUGAR SPECIFICITY | BLOOD GROUP SPECIFICITY |
|---|---|---|---|
| ROBINIA PSEUDOACACIA | RPA | | |
| CYTISUS SESSILIFOLIUS | CSA | | |
| SALVIA HORMINUM | SHA | | Anti Tn |
| SALVIA SCLAREA | SSA | | Anti TN + Cad |
| IBERIS AMARA | IAA | | Anti M |
| MANGIFERA INDICA PERSEAU AMERICANA | | | |
| PHASEOLUS VULGARIS (PHA-P) | PHA | D-Gal(1→4)-βD-GlcNAc(1→2)-α-D-man β-D-Gal(1→4)-βD-GlcNAc(1→2)-α-D-man | nonspecific |

Lectins have been used for cell separation. Because different cells and cell types display different sugars on their surface, they will be bound by lectins specific for the specific sugars displayed. Thus, the present invention uses lectins immobilized on piezoelectric surface wave devices to determine the types and amounts of various cells, cell fragments or cell components present in the sample to be measured.

Some examples of lectins used for cell separation are set forth in Table 2.

## TABLE 2

## LECTINS USED FOR CELL SEPARATION

| SOURCE OF LECTINS AND ABBREVIATED NAME | SOURCE OF CELLS | EXAMPLES OF CELLS SEPARATED |
|---|---|---|
| Dolichos biflorus (DBA) | Human | $A_1$ and O(H) erythrocytes |
| Griffonia simplicifolia I (GSLI) | Murine | Stimulated and resident macrophages |
| Helix pomatia (HPL) | Human<br><br>Murine | Peripheral B&T lymphocytes*<br>B&T splenocytes* |
| Limulus polyphemus (LPA) | Murine | Spleen T helper cells |
| Lotus tetragonolobus (LTL) | Human | Peripheral blood neutrophils<br>Bone marrow hemopoietic progenitor cells |
| Peanut (PNA) | Human<br><br><br><br>Murine<br><br><br><br>Chicken | Cortical and medullary thymocytes<br>Immature and mature cord blood lymphocytes.<br>Cortical and medullary thymocytes<br>Suppressor spleen T cells.<br>Suppressor lymphocytes |
| Pokeweed (PWM) | Murine | Granulocyte-macrophage progenitor cells |

TABLE 2 (CONTINUED)

| SOURCE OF LECTINS AND ABBREVIATED NAME | SOURCE OF CELLS | EXAMPLES OF CELLS SEPARATED |
|---|---|---|
| Soybean (SBA) | Human | Helper and suppressor lymphocytes Bone marrow stem cells. |
|  | Murine | B&T splenocytes Stem cells from spleen. |
|  | Hamster | B&T splenocytes. |
|  | Monkey | Bone marrow stem cells |
| Wheat germ (WGA) | Murine | B&T splenocytes |
| Vicia villosa (VVL) | Murine | Cytotoxic T cells |
| * After treatment of the cells with neuraminidase | | |

Lectins have also been used in diagnostic microbiology, since different microorganisms have different surface components. Lectins have been used to differentiate and confirm identification of an organism from a primary isolation medium. By using lectins as described in the present invention it is possible to determine what microorganisms are present in a sample with great specificity and in a very short time, without culturing the organism.

Applications of lectins in diagnostic microbiology are set forth in Table 3. Examples of lectins used for microbiological applications are set forth in Table 4.

TABLE 3

**APPLICATIONS OF LECTINS IN DIAGNOSTIC MICROBIOLOGY**
**DIAGNOSTIC PROBLEM**

Differentiation of Neisseria gonorrhoeae from other Neisseria and related bacteria
Differentiation of staphylococci
Prevent misdiagnosis of Listeria monocytogenes and group B streptococcal infections
"Typing" of Bacillus species
"Typing" of Legionella spp.
Differentiation of Candida and Cryptococcus, Rhodotorula
Specific agglutination of group C streptococci
Differentiation of pathogenic from non-pathogenic Entamoeba histolytica
Identification of fungi in paraffin sections of surgical and post-mortem specimens

## TABLE 4

### LECTINS USED FOR MICROBIOLOGY

| Organism | Lectin(s) |
|---|---|
| I. Bacteria | |
| Acholeplasma | RCA, ConA |
| Bacillus | ConA |
| Chlamydia | WGA |
| Escherichia | Carcinoscorpin (CSN), ConA, HPA, LPA |
| Legionella | Many lectins, plant extracts |
| Micrococcus | ConA |
| Mycoplasma | Many lectins, including PHA, ConA, RCA |
| Neisseria | WGA, PNA, RCA, SBA |
| Nitrobacter | ConA, WGA, DBA, PHA, UEA, HPA, RCA |
| Pseudomonas | ConA, LCH |
| Salmonella | CSN, ConA, HPA |
| Staphylococcus | LPA, WGA |
| Streptococcus | RCA, ConA, DBA, WFA, SBA, HPA, WGA |
| Treponema | WGA |
| Vibrio | CSN |
| II.  Yeasts, Fungi | |
| Aspergillis | SBA |
| Candida | ConA |

## TABLE 4 (CONTINUED)

| Cryptococcus | ConA |
|---|---|
| Fusarium | ConA, WGA |
| Penicillium | SBA, ConA |
| Saccharomyces | ConA, WGA |
| Schizosaccharomyces | ConA |
| Sporobolomyces | WGA |
| Roodotorula | ConA |
| III. Protozoa | |
| Entamoeba | ConA |
| Giardia | WGA, ConA, PHA, PNA, SBA |
| Leishmania | ConA, PHA |
| Toxoplasma | ConA, WGA, SBA |
| Trypanosoma | ConA, SBA, WGA |

An array of piezoelectric surface wave sensors coated with different lectins of known specificities may be used to characterize the sugar moieties present in a carbohydrate-compound containing sample that is intact or partially digested. Thus, the device of the present invention allows measurement of monosaccharides, oligosaccharide or polysaccharides in solution or present on cells, cell fragments, cell components, bacteria, yeast, fungi, protozoa or viruses; glycoproteins, glycopeptides, glycolipids or other glycoconjungates in solution or present on cells, cell fragments, cell components, bacteria, yeast, fungi, protozoa or viruses; and differentiation of cells, cell fragments, cell components, bacterial, yeast, fungi, protozoa or viruses in a sample.

It is unexpected that molecules as small as single sugars may be detected using piezoelectric surface wave devices. The use of the device of the present invention extends the range of detectable molecules down to molecular weight of about 150.

In one particular embodiment and by way of example only, the reactive surface layer is formed in a three step process which first involves the sputter deposition of $SiO_2$ (about 100 to about 1000 Angstroms thick and preferably about 500 Angstroms thick) onto the piezoelectric surface wave device surface which results in a number of reactive hydroxyl groups on the surface. In the second step, the hydroxyl groups are then treated with an organosilane coupling agent to further functionalize the reactive surface layer.

In this regard, the organosilane coupling agent is preferably represented by the formula $R_nSiX_{(4-n)}$ where X represents a hydrolyzable group, for example, alkoxy, acyloxy, amine, chlorine and the like; R represents a non-hydrolyzable organic radical that possesses functionality which enables the coupling agent to bond with organic resins and polymers, and the like; and n is an integer equal to 1, 2 or 3. One example of such an organosilane coupling agent is 3-glycidoxypropyltrimethoxysilane (GOPS) and the chemistry for this step is well known in the art. Another example of an organosilane coupling agent is ($\gamma$-aminopropyl)-triethoxysilane. Other suitable coupling agents are well known in the art.

14

In a third step, the organosilane coupling agent (now covalently attached to the surface of the piezoelectric substrate) is bound directly or after derivatization so as to provide for reactive surface layer on the surface of the piezoelectric surface wave device. As an example of this latter embodiment, if the organosilane coupling agent contains epoxy groups, then these groups can be converted to reactive aldehyde groups by conventional methods (e.g., reaction with sodium periodate) so as to provide for a surface layer on the device which is reactive with amine groups.

The ligand binding layer is then attached by contacting the reactive surface layer with a ligand binding reagent under conditions which permit the ligand binding reagent to strongly bind to the reactive surface layer so as to form a ligand binding layer. Suitable ligand binding reagents are well known in the art and the only requirement is that the ligand binding reagent contain sufficient functionality so as to both bind to the reactive surface layer and the receptor.

Preferred ligand binding reagents include avidin, streptavidin, lectins, etc. In one embodiment, the ligand binding reagent is avidin and the surface reactive layer contains aldehyde groups which then covalently bind to the avidin through the amine groups thereon to form imines (i.e., Schiff bases). Reduction of the imine with a suitable reducing agent such as sodium cyanoborohydride at suitable pH provides the amine derivative and results in the covalent attachment of the avidin to the surface layer of the piezoelectric surface wave device.

Alternatively, if the reactive surface layer of the piezoelectric device contains amine functionality, then it can be directly reacted with the carboxyl groups on avidin to form covalent amide bonds therewith. In this embodiment, it may be desirable to activate the carboxyl groups of the avidin prior to reaction with the amine functionality.

In any event, after formation of the ligand binding layer, the receptor or ligand bearing layer is formed. This layer is readily formed by contacting the ligand binding layer with a receptor molecule which is selective for the preselected analyte and which contains further functionality suitable for binding to the ligand binding layer. The coupling of a receptor molecule to a ligand binding layer is well known in the art. Preferred receptor molecules include lectins, lectin subunits, and lectin analogs which contain amino and carboxyl functionality allowing them to be bound to the ligand binding layer with minimum loss of activity for the preselected analyte. Other preferred receptor molecules are biotinylated lectins, lectin subunits, or lectin analogs which become bound to the preferred avidin ligand binding layer by tight biotin/avidin bonds and which are nevertheless selective for the preselected analyte.

As is apparent, the same or different receptors can be bound to the surface of a piezoelectric surface wave device. When the same receptors are employed, the resulting individual device can detect both the presence and concentration of the preselected analyte. When different receptors are employed, the resulting individual device can detect only the presence of one of the preselected analytes but cannot determine which analyte(s) are present or their concentration.

Additionally, while the above discloses one method for attaching a receptor layer onto the surface of the piezoelectric surface wave device, other methods are well known in the art including, for example, direct coupling of the receptor to the surface.

The term "piezoelectric surface wave reference device" refers to a piezoelectric surface wave device whose surface has been derivatized in a manner similar to that of the sample piezoelectric surface wave sample device but which includes a receptor layer having little or no affinity for the analyte(s) complementary to the receptors found on the surface of the piezoelectric surface wave sample device. Preferably, the piezoelectric surface wave reference device possesses a binding affinity for the preselected analyte of at least $10^2$ less, more preferably at least $10^4$ less, and even more preferably at least $10^6$ less, than the binding affinity of the piezoelectric surface wave sample device for this analyte.

Receptors having little or no affinity for an analyte are well known in the art and can be readily obtained by a variety of mechanisms including use of a lectin or lectin subunit which is not complementary to the preselected analyte. Similarly, chemically altering a lectin or lectin subunit so that it can no longer bind to its complementary analyte is readily achieved by standard chemical procedures. Proteins such as BSA or other molecules, which are selected because they are similar in size to the immobilized receptor but noncomplementary to the analyte to be measured, may also be used on the reference device.

Piezoelectric surface wave reference devices containing receptor layers having little or no affinity for the preselected analyte(s) are effective in reducing physical (temperature, pressure) and chemical (non-specific binding, ionic strength/conductivity/mass density and viscosity) interferences in analyte concentration determinations made by the sample devices by accounting for the shift in resonant frequency not attributable to changes in mass on the surface on the piezoelectric surface wave device.

## Measurement System

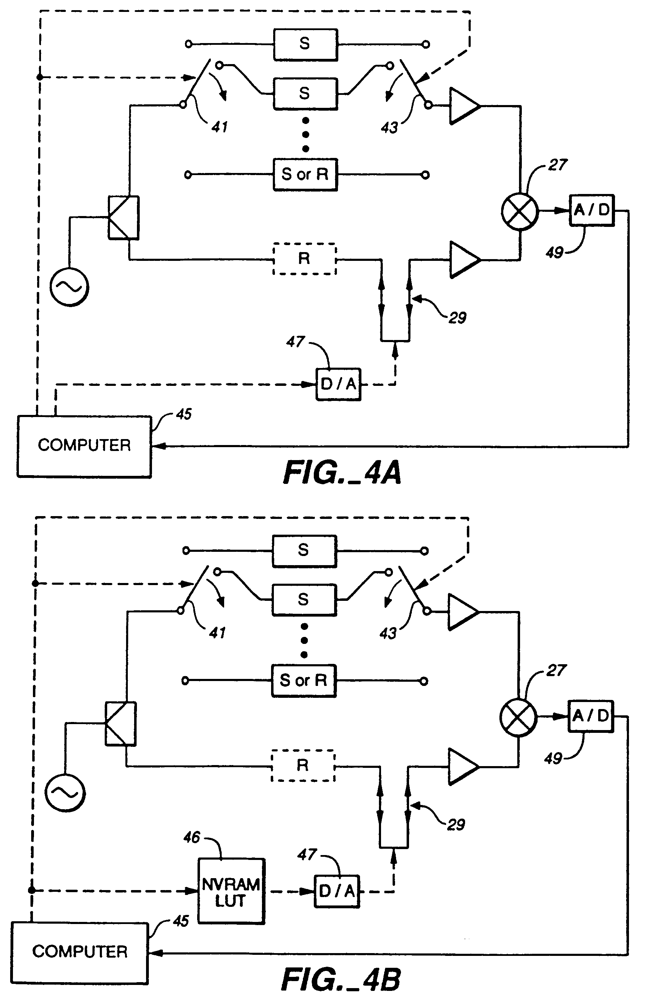

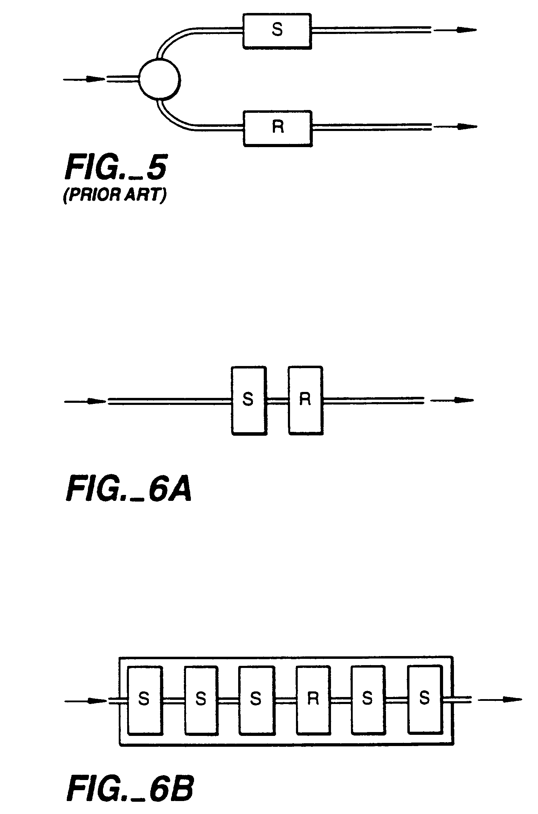

The measurement instrument described herein provides a means for data acquisition to measure the shift in the resonant frequency or the phase delay from both the piezoelectric surface wave sample devices and reference device(s). The measurement system described herein may be single or multi-channel. A single channel measurement system comprises piezoelectric surface wave sample device(s) together with the reference device in series on the same substrate (e.g., Figure 6B). An example of a multi-channel measurement system is illustrated, for example, in Figure 4A.

Alternatively, a preferred two channel measurement configuration would mix the piezoelectric surface wave sample devices and reference device output signals before amplification. Liquids would flow in parallel over the sample and reference devices in order to synchronize their exposure cycles and reduce any sampling interferences. Thus, in this configuration, explicit reference correction would no longer be required. A hybrid device containing both sensing and reference device capability may be utilized.

The system also provides means for evaluating and calibrating the response of the piezoelectric surface wave sample devices to non-specific effects. For example, the system can be checked and calibrated with a solution of known viscosity and known conductivity. Such a solution should generate a predicted signal response and range of acceptable signal responses. Thus, when the sample devices are exposed to such a solution, the condition of the fluid path and dynamics prior to sample introduction are determined.

Once the stability of the system to a solution which does not contain the target analyte is assessed, an assortment of sample solutions, standard solutions, or solutions with internal standards may be introduced. Standard procedures are utilized to introduce the samples to the piezoelectric surface wave sample and reference devices. The samples may be directly introduced to the sample devices.

As discussed below, the measurement system also provides a means for measuring the phase delay or a related parameter such as frequency of the piezoelectric surface wave sample and reference devices. The multiplexed electronics, described below, include a means for launching acoustic waves through each device, a means for phase adjustment, mixing and amplification. The system furthermore provides a means for data acquisition software. Signal processing to account for the piezoelectric surface wave reference device response may be performed in a manner that will become readily apparent from the following description.

Standard/conventional means can be employed to introduce samples to the piezoelectric surface wave sample and reference devices as well as to define sample volume. In some configurations, this may include a fluidics system to direct reagent flow and a means for varying the rate at which sample contacts the sample and reference devices, where the actual measurement may be static or dynamic. The instrument permits a flow cassette as well as a means for sealing the cassette to the sample and reference devices. Therefore, the system can measure the relative phase delay or the rate of change of this phase delay to determine the concentration of analyte(s) in the sample.

The piezoelectric surface wave sample devices may be utilized once, used repeatedly, or used repeatedly with periodic refreshment. By periodic refreshment, it is intended that the sample device be regenerated such that it is capable of regaining functional response to the analyte.

Calibration of the system will vary depending on whether the piezoelectric surface wave sample device is to be used only once or repeatedly. If the sample device is utilized once, the calibration for that device is based on another device that is equivalent. This variation allows the sample device to perform at peak sensitivity. However, the cost per analysis is at least as great as the cost of each sample device. Thus, this approach is most useful when sample device cost is not a key concern and when inter-sample device repeatability is relatively high.

In some situations, the reuse of the piezoelectric surface wave sample device will be advantageous. In this manner, the cumulative response to a given analyte or set of analytes can be measured. While any saturation of receptors during the previous exposures may compromise accuracy, the cost per sample is reduced. This approach is most effective when the surface loading of previous samples is relatively low, as is the case for samples having low receptor binding concentrations or short exposure time. Numerous measurement cycles for a single sample device are possible with minimal loss of accuracy.

The piezoelectric surface wave sample device can also be refreshed or regenerated after each measurement to essentially regain the original response. In this variation, accuracy is improved because it is now possible to calibrate the same sample device which is used for the sample analysis. This approach also enables measurement of multiple samples by each sample device with less loss of performance than for cumulative sampling. Thus, this system provides a means for regenerating the system by dissociating the analyte, which has previously bound to the surface of the piezoelectric surface wave sample device.

Analytes may be dissociated by a variety of methods including the introduction of chemicals, such as hydrogen ions, hydroxide ions, inorganic salts, organic salts, proteolytic enzymes, proteins, denaturants, etc.; dielectric changes; the application of energy in forms such as heat, light, ultrasound, or voltage; or, any combinations of the above. The measurement system also allows for controlling and optimizing exposure parameters such as exposure time, flow rate, wash, and if employed, the energy intensity.

As indicated above, the piezoelectric surface wave sample devices utilized in the measurement system are calibrated. In the case where a sample device is used only once, calibration will occur on separate sample (calibration) devices. Where the sample devices are to be used more than once, as in the cumulative response mode, the measurement system allows the user to expose the piezoelectric surface wave sample device to one or more standard solutions sufficient to provide the desired accuracy. It is noted that the response to the standard solutions can reduce the sensitivity and performance life time of the device. Therefore, the total number of standards in sample solutions analyzed is limited in this approach.

Where the piezoelectric surface wave devices are regenerated, calibration can occur directly on the sample device. This system provides a user with the means of exposing the calibration or sample devices to the number of standard solutions sufficient to provide the desired accuracy. As the sample device can be refreshed after exposure to each standard solution, the user is not limited in the selection of either the concentration range or number of standard solutions. The data would be stored for subsequent sample analysis. An example approach of regeneration is to expose the sample device to one or multiple standards $(STD)_n$, and/or regenerations (R) between each exposure ($STD_1$/R, $STD_2$/R, $STD_3$/R .... $STD_n$/R) , then run a desired number of samples $(S_n)$, ($S_1$/R, $S_2$/R, $S_3$/R .... $S_n$/R), intermittently check calibration, ($STD_n$/R, $STD_{(n+1)}$/R ....), run a desired number of samples, etc. The system also provides for calibration methods such as standard additions and other analytical techniques routinely used to reduce non-specific effects and improve accuracy.

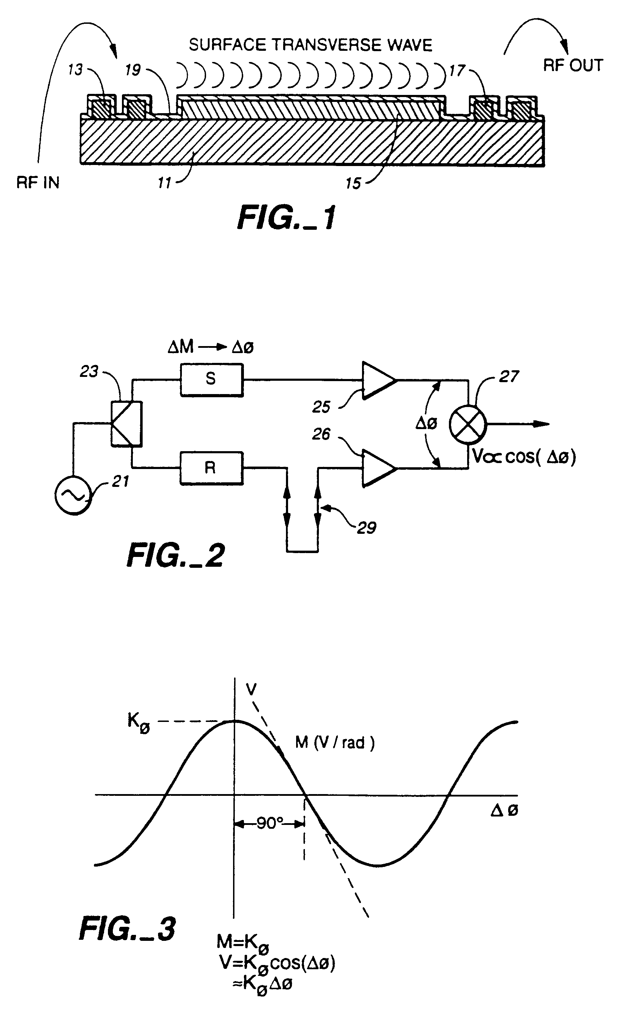

A particularly preferred measurement instrument for use in this invention is described in Figures 1-6 attached. Specifically, Figure 1 shows a piezoelectric surface wave device (Love Wave device) that may be used in the present chemical analyzer as either a sample or reference device. The device is composed of a piezoelectric substrate 11, an input transducer 13, a surface wave plate 15, and an output transducer 17. The input transducer, the surface wave plate and the output transducer are all coated with a chemical binding layer 19 described above. Briefly, when the piezoelectric surface wave sample device is immersed in a liquid sample containing analytes of interest, such analytes bind to the surface of the device, thereby increasing the mass loading of the top surface. Radio frequency energy coupled into the device through the input transducer is converted to a surface acoustic wave confined to within a few wavelengths of the surface, the velocity of the surface acoustic wave varying according to the mass loading of the top surface of the device. The surface acoustic wave propagates along the surface of the device until it encounters the output transducer, which converts the surface acoustic wave back into RF energy. The change in velocity of the surface acoustic wave with the mass loading of the surface of the device translates into variation of the phase of the radio frequency signal output by the output transducer.

Besides being sensitive to changes in mass, the piezoelectric surface wave device of Figure 1 is also susceptible to extraneous influences including, for example, the viscosity of the sample. In order to remove such extraneous influences from the final measurement, the chemical analyzer uses a piezoelectric surface wave reference device in cooperation with the sample device, both devices being subject to substantially the same extraneous influences. Referring to Figure 2, energy from a radio frequency source 21 is split equally in a power splitter 23 and input to a sample device S and a reference device R. Both devices have the property that a change in surface mass will result in a change of phase of a signal output by the output transducer of the device. The surface chemistries of the two devices are controlled, however, such that only the sample device has a significant affinity for a particular analyte of interest. In all other respects, the devices are subject to substantially the same influences. Accordingly, the phase difference $\Delta\phi$ between the signal output by the sample device and the signal output by the reference device is directly related to the amount of analyte in the chemical sample. The signals from the devices are amplified in amplifiers 25 and 26 and input into a mixer 27. The purpose of the mixer is to produce a signal representing the phase difference between the sample device signal and the reference device signal. The mixer produces a voltage proportional to cos $(\Delta\phi)$. An adjustable delay line 29 is provided between the output of the reference device and the input of amplifier 26 for purposes to be presently explained. In essence, the apparatus of Figure 2 constitutes an interferometer, the sample device being placed in one arm and the reference device being placed in the other arm of the interferometer.

Referring to Figure 3, the output of the mixer is a cosine wave having a maximum amplitude of $K_\phi$. At $\Delta\phi$ = 0, the cosine wave has a slope of 0. Operating the interferometer about this point would result in poor sensitivity. At $\Delta\phi$ = 90°, on the other hand, the slope M, measured in volts per radian, is of maximum magnitude. Operating the chemical analyzer about this point therefore results in maximum sensitivity. Mathematically it may be shown that $M = K_\phi$. For small excursions about the zero crossing, the relation $V = K_\phi \Delta\phi$ holds. In operation, the chemical analyzer is first calibrated by adjusting the delay line to obtain the maximum output from the mixer, the maximum output being equal to $K_\phi$. The delay line is then adjusted so as to produce a zero output from the mixer, placing signals from the sample device signal and the reference device signal in quadrature relation to one another. The chemical analyzer is then ready to perform an accurate measurement due to the high sensitivity of the chemical analyzer about the selected operating point.

In the arrangement of Figure 2, cancellation of interferences due to influences other than the presence of analyte in the chemical sample is performed immediately and automatically by the mixer 27. Immediate and automatic cancellation is not strictly necessary, however. Furthermore, the chemical analyzer in Figure 2 is not able to perform multiple measurements of multiple analytes from a single sample. To perform multiple measurements, the electronics of Figure 2 may be duplicated as many times as desired. However, the resulting apparatus would be unduly complicated and expensive.

Referring to Figure 4A, using computer-controlled multiplex electronics, a chemical analyzer may be constructed that is capable of performing multiple measurements of multiple analytes from a single sample. With the reference device R located in the reference arm of the interferometer, the same basic interferometric technique may be used as in Figure 2. Instead of a single sample device S being fixed in the sample arm of the interferometer, however, multiple sample devices are switched in and out of the sample arm using switches 41 and 43. The switches are controlled in ganged relation by a computer 45 such that both switches are connected to the same sample device S at the same time. The different sample devices each requires its own calibration setting of the variable delay line 29. Whereas the arrangement of Figure 2 allows a mechanically variable delay line to be used, in Figure 4A, in order for the delay to be changed in rapid synchronism with the switches, an electronically variable delay line based on varactor diodes is used. As the switches are switched, the computer retrieves the calibration value corresponding to the active device from a table of calibration values and sends the calibration value to a D/A converter 47. The D/A converter converts the calibration value to an analog value used to control the variable delay line to produce the appropriate delay for the selected device.

In another embodiment, shown in Figure 4B, the table of calibration values is stored in an external look-up table 46, for example, a non-volatile RAM (NVRAM). The same signals used to control the switches may be used as an index value to the look-up table.

The reference device R, indicated in dash lines, need not remain in the reference arm of the interferometer but rather may be situated with the sample devices S on the sample side of the interferometer. Cancellation of interference is then no longer automatic and immediate but must be performed arithmetically by the computer 45. Successive outputs of the mixer 27 are converted by A/D converter 49 to digital values and stored in the computer 45 for subsequent manipulation. In particular, a reference value obtained while the reference device is connected in the device arm of the interferometer is subtracted from the values obtained with each of the other devices.

The ability to perform interference cancellation digitally in non-real time greatly enhances the flexibility of the chemical analyzer. Referring to Figure 5, prior art chemical analyzers have typically divided a sample flowing through the chemical analyzer into separate portions, causing one portion to flow across a sample device and another portion to flow across a reference device. In order to perform multiple measurements of multiple analytes, such an approach would require a very large sample volume. Large sample volumes are not only inconvenient but in many instances are simply not available.

In the present chemical analyzer, multiple measurements of multiple analytes may be made from a single sample by arranging a reference device and multiple sample devices in series and causing a single sample to flow across each of the devices in turn as illustrated in Figure 6A (single sample device S, single reference device R) and Figure 6B (multiple samples devices S, single reference device R). Flow delay then requires that the signal from each of the sample devices and the signal from the reference device be referenced to a common time base. Assume, for example, that a first device in the series produces at an output signal time T in response to a sample flow. The sample volume then going across the first device does not reach the next device until a time $T + \Delta T_1$ where $\Delta T_1$ is the flow delay between the first and second devices. Similarly, the flow delay of each of the other devices with respect to the first device may be represented as $\Delta T_2$, $\Delta T_3$, ..., $\Delta T_n$. The flow delay of, each of the devices with respect to the first device may be measured, for example, by producing a sudden change in the viscosity of the solution being sent through the analyzer and measuring how long it takes for that change of viscosity to be manifested at each device. These flow delays are stored in the computer 45 and used to digitally align the time-bases of signals from each of the sample devices S with the time-base of the reference device R.

18

Take, for example, the case of a first sample device, followed by a reference device, followed by a second sample device. The flow delay from the first sample device to the reference device may be designated as $\Delta T_1$, and the flow delay from the reference device to the second sample device may be designated as $\Delta T_2$. When the signal from the reference device is subtracted from the signal from the first sample device, the value of the reference signal at time $t + \Delta T_1$ will be subtracted from the value of the first sample device signal at time t. Similarly, when the signal from the reference device is subtracted from the signal from the second reference device, the value of the reference signal at time t will be subtracted from the value of the second sample device signal at time $t + \Delta T_2$. Each sample signal is thereby time-aligned with the reference signal despite the flow delays.

The arrangement of Figures 6A and 6B assumes exclusivity among the different sample devices. That is, no sample device upstream of a particular sample device is allowed to significantly affect the amount in the chemical sample of the analyte being sensed by that particular sample device.

Preferably, the devices in the arrangement of Figures 6A and 6B are all formed on a single piezoelectric substrate. Such a construction, besides being convenient and economical, results in all of the devices having substantially uniform characteristics. One of the devices is designated as a reference device R and coated with a chemical layer that has only minimal affinity for the analytes to be tested for but that otherwise mimics the response of the other devices.

The chemical analyzer according to the foregoing construction allows multiple measurements of multiple analytes to be taken from a single sample quickly and easily. During calibration, a buffer solution is caused to flow through the chemical analyzer and $K_\phi$ and phase setting values are obtained and stored for each of the devices. A sample to be analyzed is then caused to flow through the chemical analyzer. As the sample flows across each of the devices, separate measurements are obtained. The multiple devices may either each be used to measure a different analyte or may all be used to measure the same analyte to provide statistically greater reliability. A recycling agent may then be caused to flow through the chemical analyzer in order to refresh the devices and prepare them for a subsequent measurement. In this manner, a large amount of information may be rapidly obtained from a small amount of chemical sample.

While more than one sample device can be utilized, the measurement system described herein preferably employs no more than about 20 sample devices and no more than about 3 reference devices. More preferably, the system employs about 2 to 6 sample devices and 1 reference device.

The following examples are offered by way of illustration and should not be construed to in any way limit the invention.

Example 1

The lectin, Erythrina cristagalli (ECL) can be immobilized on to the $SiO_2$ coated surface of a piezoelectric surface wave device by introducing -$NH_2$ groups via an alpha-aminopropyltriethoxysilane The -$NH_2$ groups may then be reacted in the presence of cyanogen bromide to bind the ECL via a guanidine linkage.

Example 2

An epoxide functional group may be applied to the $SiO_2$ coated surface of a piezoelectric surface wave device via glycidoxypropyltrimethoxysilane (GOPS), then the protein avidin may be covalently bound to the surface. A biotin-avidin linkage may then be used to immobilize ECL on the avidin coated device. Upon contact with compounds containing galactose residues, an ECL-saccharide bond will be formed. Due to the high association constant for the biotin-avidin complex, acid or heat may be used to dissociate the lectin-saccharide bond without affecting the biotin-avidin linkage. Thus, the ECL will remain immobilized on the device, which may be used to analyze additional samples.

The present system provides broadly applicable methodology for measurement of carbohydrate-containing compounds by the use of lectins, lectin subunits or lectin analogs immobilized on piezoelectric surface wave devices. The invention provides precise measurements in the absence of complex or labor-intensive separation steps. Furthermore, there is no need to derivatize the sample or related reagent solutions with chromophoric, radioactive, fluorescent, or chemiluminescent labels.

All references cited herein are incorporated by reference. Although the foregoing refers to particular preferred embodiments, it will be understood that the present invention is not so limited. It will occur to those of ordinary skill in the art that various modifications may be made to the disclosed embodiment, and that such modifications are intended to be within the scope of the present invention, the scope of which is limited only the following claims.

**Claims**

1. A measurement system for determining the amount of at least one carbohydrate-containing analyte in a sample, comprising:

    (a) at least one piezoelectric surface wave sample device (S) comprising a receptor layer (19) attached to a surface thereof, said receptor layer (19) containing at least one molecule, selected from the group consisting of naturally occurring or non-naturally occurring lectins, lectin subunits, and lectin analogs, which is complementary to and has affinity for said carbohydrate-containing analyte, said sample device (S) including data generating apparatus for generating data relating to the mass change on said surface of said sample device (S) arising from contacting said sample device (S) with said sample;

    (b) at least one piezoelectric surface wave reference device (R) comprising a receptor layer (19) having substantially no affinity for said carbohydrate-containing analyte, said reference device (R) including data generating apparatus for generating data relating to the interferences arising from contacting said reference device (R) with said sample; and

    (c) a measurement instrument for correlating said data from said sample and reference devices so as to provide data on the presence and/or amount of said carbohydrate-containing analyte in said sample.

2. The system of Claim 1 wherein said carbohydrate-containing analyte comprises monosaccharides, oligosaccharides and polysaccharides.

3. The system of Claim 1 wherein said carbohydrate-containing analyte comprises glycoproteins, glycopeptides, glycolipids and glycoconjugates.

4. The system of Claim 1 wherein said carbohydrate-containing analyte comprises cells, cell fragments, cell components, bacteria, yeast, fungi, protozoa and viruses.

5. The system of Claim 1 wherein said sample and reference devices further comprise a surface layer.

6. The system of Claim 5 wherein said surface layer is $SiO_2$.

7. The system of Claim 6 wherein said surface layer further comprises a reactive surface layer bound to said surface layer wherein said reactive surface layer is selected from the group consisting of organic silanes, avidin, streptavidin, proteins, lipids, and synthetic coatings.

8. A measurement system according to Claim 1 adapted for testing for a plurality of carbohydrate-containing analytes in a sample, including a plurality of piezoelectric surface wave sample devices (S) formed on a single piezoelectric substrate (11), each of said piezoelectric surface wave sample devices (S) having a different receptor layer (19) attached to a surface thereof, each receptor layer (19) containing receptor molecules, selected from the group consisting of naturally occurring or non-naturally occurring lectins, lectin subunits and lectin analogs, which are complementary to and have affinity for one of said plurality of carbohydrate-containing analytes.

9. A measurement system according to Claim 1 adapted for testing for a single carbohydrate-containing analyte in a sample, including a plurality of piezoelectric surface wave sample devices (S) each having a receptor layer (19) attached to the surface thereof, each receptor layer (19) containing receptor molecules, selected from the group consisting of naturally occurring or non-naturally occurring lectins, lectin subunits and lectin analogs, which are complementary to and have affinity for the same carbohydrate-containing analyte, each sample device (S) generating data relating to the mass change on said surface of said sample device (S) arising from contacting said device with said sample.

10. The system of claim 9 wherein said plurality of piezoelectric surface wave sample devices (S) are formed on a single piezoelectric substrate (11).

11. A method for determining the amount and/or presence of at least one carbohydrate-containing analyte in a sample, comprising:

(a) contacting said sample with a measurement system for determining the amount of carbohydrate-containing analyte in a sample which system comprises:

(1) at least one piezoelectric surface wave sample device (S) comprising a receptor layer (19) attached to a surface thereof, said receptor layer (19) containing at least one molecule, selected from the group consisting of naturally occurring or non-naturally occurring lectins, lectin subunits and lectin analogs, which is complementary to and has affinity for said carbohydrate-containing analyte, said sample device (S) including data generating appatatus for generating data relating to the mass change on said surface of said sample device (S) arising from contacting said sample device (S) with said sample;

(2) at least one piezoelectric surface wave reference device (R) comprising a receptor layer (19) having substantially no affinity for said carbohydrate-containing analyte, said reference device (R) including data generating apparatus for generating data relating to the interferences arising from contacting said reference device (R) with said sample; and

(3) a measurement instrument for correlating said data from said sample and reference devices so as to prov1ide data on the presence and/or amount of said carbohydrate-containing analyte in said sample;

(b) obtaining data from said sample and reference devices; and

(c) determining the presence and/or concentration of said carbohydrate-containing analyte in said sample.

SURFACE TRANSVERSE WAVE

RF OUT

RF IN

*FIG._1*

$\Delta M \longrightarrow \Delta \emptyset$

S

R

$\Delta \emptyset$

$V \propto \cos(\Delta \emptyset)$

*FIG._2*

V

$K_\emptyset$

M (V / rad )

$\Delta \emptyset$

90°

$M = K_\emptyset$
$V = K_\emptyset \cos(\Delta \emptyset)$
$\approx K_\emptyset \Delta \emptyset$

*FIG._3*

**FIG._4A**

**FIG._4B**

**FIG._5**
(PRIOR ART)

**FIG._6A**

**FIG._6B**